Europäisches Patentamt

European Patent Office

Office européen des brevets

(19)

(11) Veröffentlichungsnummer : **0 253 277 B1**

(12) **EUROPÄISCHE PATENTSCHRIFT**

(45) Veröffentlichungstag der Patentschrift :
28.09.94 Patentblatt 94/39

(51) Int. Cl.⁵ : **G01S 11/00**

(21) Anmeldenummer : 87109774.7

(22) Anmeldetag : 07.07.87

(54) **Passives Verfahren zur Schätzung von Zieldaten eines im Wasser sich bewegenden, zeitkontinuierliche Wasserschallsignale abstrahlenden Ziels.**

(30) Priorität : 12.07.86 DE 3623521

(43) Veröffentlichungstag der Anmeldung :
20.01.88 Patentblatt 88/03

(45) Bekanntmachung des Hinweises auf die
Patenterteilung :
28.09.94 Patentblatt 94/39

(84) Benannte Vertragsstaaten :
**DE FR GB IT NL SE**

(56) Entgegenhaltungen :
DE-A- 3 200 820
DE-A- 3 322 500
GB-A- 2 104 218

(56) Entgegenhaltungen :
**JOURNAL OF THE ACOUSTICAL SOCIETY OF AMERICA, Band 63, Nr. 3, März 1978, Seiten 870-875, Acoustical Society of America, New York, US; R.E. WILCOX: "Underwater doppler tracking using optimization techniques"**
**JOURNAL OF THE ACOUSTICAL SOCIETY OF AMERICA, Band 66, Nr. 5, November 1979,Seiten 1412-1419, Acoustical Society of America, New York, US; P.M. SCHULTHEISS et al.: "Estimation of differential doppler shifts"**

(73) Patentinhaber : **ATLAS ELEKTRONIK GMBH D-28305 Bremen (DE)**

(72) Erfinder : **Bödecker, Götz, Dr.**
**Lärchenweg 14**
**D-2810 Völkersen (DE)**
Erfinder : **Siegel, Manfred**
**H.-C.-Junge-Weg 18**
**D-2800 Bremen 33 (DE)**
Erfinder : **Ziegenbein, Jochen, Dr.**
**Windthorst-Weg 13**
**D-5308 Rheinbach (DE)**

EP 0 253 277 B1

**Beschreibung**

Die Erfindung betrifft ein passives Verfahren zur Schätzung von Zieldaten eines im Wasser sich bewegenden, zeitkontinuierliche Wasserschallsignale, z.B. Antriebsgeräusche, abstrahlenden Ziels, insbesondere eines im Flachwasser fahrenden Schiffes, der im Oberbegriff des Anspruchs 1 angegebenen Gattung.

Bei einem bekannten Verfahren dieser Art (DE-PS 887 926) werden zur Bestimmung von Kurs, Geschwindigkeit und Entfernung einer Geräuschquelle nacheinander mehrere Horchpeilungen ausgeführt. Der Zeitabstand zwischen den Peilungen wird gemessen und eine Peilwinkel-Zeitkurve erstellt. Diese Peilwinkel-Zeitkurve wird von einer vorgegebenen Kurvenschar überlagert, die für die verschiedenen Entfernungen erstellt ist. Durch Vergleich der Peilwinkel-Zeitkurve mit der Kurvenschar läßt sich die Geschwindigkeit und die Entfernung der Geräuschquelle abschätzen. Ein derartiges Verfahren ist nicht nur sehr zeitaufwendig, sondern auch in hohem Maße abhängig von der Beurteilungsfähigkeit des Auswerters. Die Ergebnisse sind daher für viele Anwendungsfälle nicht zuverlässig genug.

Bei einem ebenfalls bekannten Verfahren der eingangs genannten Art wird das Zieldatum "Entfernung" eines Geräusche abstrahlenden Ziels aus der Bestimmung der entfernungsabhängigen Durchbiegung einer Schallfront gewonnen. Die Krümmung oder Durchbiegung der Schallfront wird mit Hilfe dreier Empfangseinrichtungen, sog. Basen, ermittelt, die mit gleichem Abstand voneinander in einer quer zur Schallausbreitungsrichtung sich erstreckenden Ebene angeordnet sind. Dabei wird zunächst zwischen vorderer und mittlerer Basis und hinterer und mittlerer Basis breitbandig die Kreuzkorrelation gebildet. Dann werden die Maxima aufgesucht, und es wird deren Differenz, die proportional der Durchbiegung der Schallwellenfront ist, bestimmt. Die Entfernung berechnet sich als Quotient aus dem Abstandsquadrat der Basen und der zweifachen Durchbiegung. Dieses Verfahren erfordert zu seiner Durchführung einen relativ großen konstruktiven und fertigungstechnischen Aufwand, da allein für die Entfernungsmessung drei zusätzliche, mit einer Vielzahl von Hydrophonen bestückte Basen erforderlich sind, deren notwendig genaue Ausrichtung zueinander noch einen beträchtlichen Montageaufwand verlangt.

Der Erfindung liegt die Aufgabe zugrunde, ein Verfahren der eingangs genannten Art anzugeben, das ohne großen Zusatzaufwand mit üblichen, zur Unterwasserortung auf Schiffen ohnehin installierten Sonaranlagen die Bestimmung aller Zieldaten oder Zielparameter eines zeitlich unbegrenzte Wasserschallsignale, z.B. Antriebsgeräusche, abstrahlenden Ziels, einschließlich des Zieldatums "Zielentfernung" ermöglicht.

Die Aufgabe ist bei einem Verfahren der im Oberbegriff des Anspruchs 1 definierten Gattung erfindungsgemäß durch die Merkmale im Kennzeichenteil des Anspruchs 1 gelöst.

Bei dem erfindungsgemäßen Verfahren werden einerseits die Eigenschaften des Flachwasserkanals, nämlich der verstärkt auftretende Nachhall, und andererseits die Tatsache ausgenutzt, daß bewegte Ziele, insbesondere fahrende Schiffe, starke Antriebsgeräusche abstrahlen, in deren Spektrum spezifische Frequenzen mit geringer Frequenzlinienbreite enthalten sind, die z.B. von der Drehzahl einer Schiffsschraube und deren Schraubenblattzahl, von Antriebsmaschinen, von Stromerzeugern etc. herrühren. Diese spezifischen Frequenzen erfahren an im Wasserschallkanal befindlichen Streuzentren entsprechend der Relativgeschwindigkeit des Ziels zu diesen Streuzentren eine Frequenzverschiebung durch den Dopplereffekt. Diese sog. Dopplernachhallfrequenzen lassen sich im Frequenzspektrum des Empfangssignals detektieren. Durch die Zeitkontinuität des Geräusches kann bei der Frequenzanalyse ein relativ großer Zeitabschnitt des Empfangssignals ausgenutzt werden, der eine hohe Frequenzauflösung gestattet. Der Zeitabschnitt ist jedoch begrenzt durch die Zielgeschwindigkeit, die bei zu großer Wahl des Zeitabschnittes ein sog. Verschmieren des Dopplernachhall-Frequenzspektrums verursacht. Durch die erfindungsgemäße Detektion der Dopplernachhallfrequenzen im hochfrequenten Bereich des Frequenzspektrums kann man bei vernünftig gewählter Größe des für die Frequenzanalyse verwendeten Zeitabschnitts des Empfangssignals eine zur Dopplerbandbreite hinreichend große Frequenzauflösung erzielen.

Das erfindungsgemäße Verfahren setzt voraus, daß die Breite des Empfangs-Richtungskanals oder Empfangsbeams nicht unendlich klein ist, sondern dieser eine endliche Breite aufweist, wie dies bei allen Sonaranlagen der Fall ist. Weitere Voraussetzungen sind die Nachhalleigenschaft des Schallkanals und eine von Null abweichende Zielgeschwindigkeit.

Es ist bereits ein Verfahren zur Schätzung von Zieldaten, einschließlich Zielentfernung, bekannt (DE-OS 33 45 021), bei welchem ebenfalls der Nachhall im Flachwasserkanal ausgenutzt wird. Bei diesem Verfahren ist jedoch Voraussetzung, daß das Ziel Schallenergie in zeitbegrenzten Intervallen, also Schallimpulse, abstrahlt. Solche Ziele sind z.B. Schiffe mit aktiv ortenden Sonaranlagen. Der von den Schallimpulsen erzeugte Nachhall ist eine Funktion der Zeit und wird am Empfangsort aus einer beliebigen, jedoch nicht zielweisenden Empfangsrichtung empfangen. Aus dem Empfangssignal werden die Frequenzspektren gebildet, und zwar für eine Vielzahl von Zeitpunkten $t_i$ eines von Nachhallauffassung an laufenden Zeitrasters. Die in den Nachhallspektren enthaltenen Dopplernachhallfrequenzen werden bestimmt und den jeweiligen Zeitpunkten $t_i$ zuge-

ordnet. Die Vielzahl dieser Dopplernachhallfrequenz-Zeitpaare ergeben eine Frequenz-Zeitkurve, aus welcher durch Regressionsrechnung die Zieldaten Geschwindigkeit, Kurs, Sendefrequenz und Entfernung des Ziels ermittelt werden. Dieses Verfahren läßt sich jedoch nicht auf zeitkontinuierliche Wasserschallsignale, wie sie von Antriebsgeräuschen von Schiffen repräsentiert sind, anwenden, da hier die Zeitabhängigkeit der Dopplernachhallfrequenzen nicht gemessen werden kann.

Eine zweckmäßige Ausgestaltung der Erfindung ergibt sich dabei aus Anspruch 2. Durch diese Maßnahmen können alle Zieldaten des Ziels bestimmt werden, unabhängig davon, ob es sich um ein getauchtes oder an der Wasseroberfläche befindliches Ziel handelt und ob der Empfangsort selbst sich unter Wasser oder an der Wasseroberfläche befindet. Schwimmen sowohl Ziel als auch Empfangsort auf der Wasseroberfläche, so ist das Verfahren gemäß Anspruch 5 zu verwenden, da bei diesem Sonderfall im Frequenzspektrum die Reflexionsdopplerfrequenzen geradzahliger Ordnungszahl fehlen und nur Reflexionsdopplerfrequenzen ungeradzahliger Ordnungszahl auftreten.

Die beiden Verfahren setzen voraus, daß die Tiefe h des Schallkanals, in welchem sich Ziel und Empfangsort befinden, bekannt ist. Ist dies nicht der Fall, so kann nach den weiteren Ausgestaltungen des Verfahrens gemäß den Ansprüchen 3 bzw. 6 auch zusätzlich die Tiefe des Wasserschallkanals berechnet werden.

Eine vorteilhafte Ausgestaltung des erfindungsgemäßen Verfahrens ergibt sich auch aus Anspruch 7. Durch diese Begrenzung des Spektrallinienbereichs lassen sich diejenigen Dopplernachhallfrequenzen, die nicht von der spezifischen Frequenz herrühren, wie z.B. solche, die von Harmonischen der spezifischen Frequenz erzeugt werden, sicher eliminieren. Wird für Schiffe beliebiger Bauart eine maximal mögliche Geschwindigkeit von 30 m/s (ungefähr 58 kn) bei einer Wasserschallgeschwindigkeit von 1500 m/s angenommen, so beträgt die Bandbreite des auszuwertenden Spektralbereichs maximal etwa 8 % der Frequenz der ausgewählten Spektrallinie.

Die Erfindung wird anhand eines durch die Zeichnung verdeutlichten Ausführungsbeispiels eines Verfahrens zur passiven Schätzung von Zieldaten im folgenden näher beschrieben. Es zeigen:

Fig. 1    eine schematische Darstellung eines Lagebildes eines Ziels Z und eines Empfängers E in einem Flachwasserkanal in Seitenansicht (Fig. 1b),

Fig. 2    eine prinzipielle Darstellung eines Ausschnitts aus einem Dopplernachhallfrequenzspektrum eines vom Empfänger E aufgefaßten Empfangssignals,

Fig. 3    eine prinzipielle Darstellung der Dopplernachhallfrequenzen in Fig. 2 in Abhängigkeit von der Zeit t,

Fig. 4    eine Skizze zur Veranschaulichung des Schallstrahlverlaufs im Flachwasserkanal zwischen einem getauchten Ziel Z und einem getauchten Empfänger E,

Fig. 5    eine Skizze zur Veranschaulichung des Schallstrahlverlaufs im Flachwasserkanal zwischen Ziel Z und Empfänger E, die sich beide an der Wasseroberfläche befinden,

Fig. 6    ein Blockschaltbild zur Realisierung des Verfahrens der Zieldatenschätzung.

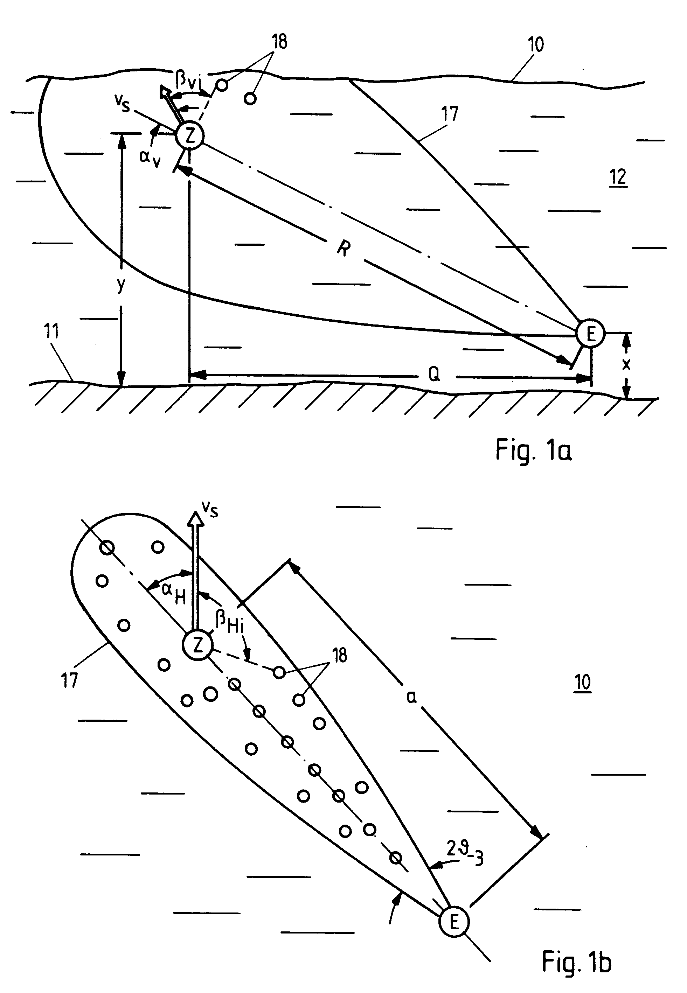

Das Verfahren zur Schätzung der unbekannten Zieldaten eines bewegten Ziels Z von einem zielfernen Empfangsort aus wird zunächst anhand der prinzipiellen Darstellungen in Fig. 1, 3 und 4 erläutert.

In einem von der Wasseroberfläche 10 und dem Meeresgrund 11 begrenzten Flachwasserkanal 12 mit der Tiefe h befindet sich im allgemeinen Fall ein Ziel Z in einer momentanen Höhe y über dem Meeresgrund 11 und bewegt sich mit einer unbekannten Geschwindigkeit $v_S$. Das Ziel Z kann z.B. ein beliebiges Unterwasserfahrzeug sein, das zeitkontinuierliche Wasserschallsignale, z.B. von seinem Antriebsmechanismus verursachte Geräusche, abstrahlt.

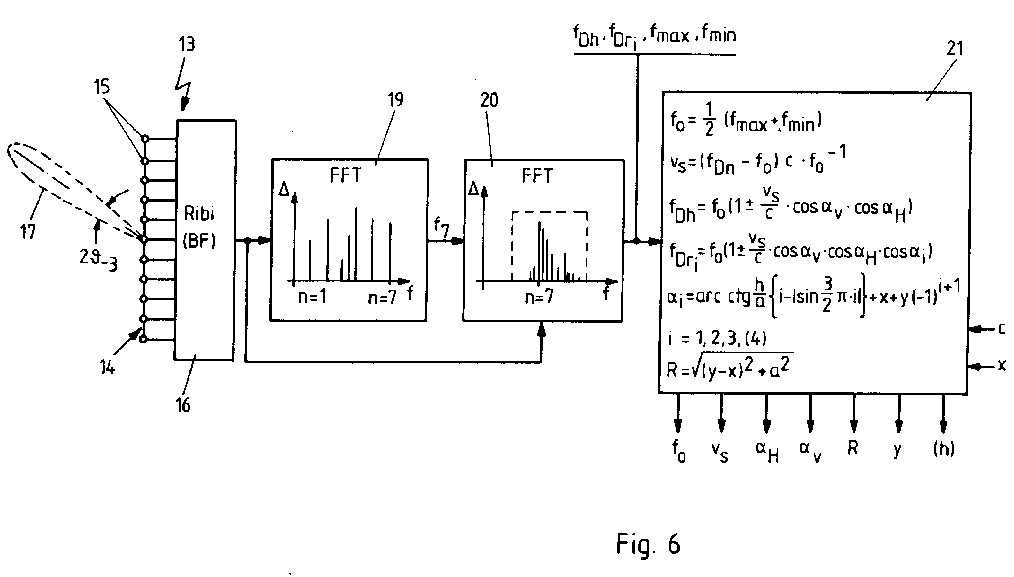

Am momentanen Empfangsort, der eine Entfernung R vom Ziel Z und eine Höhe x über den Meeresgrund 11 aufweist, befindet sich ein Wasserschallempfänger E, z.B. eine auf einem U-Boot installierte Passivsonaranlage. Wie in Fig. 6 schematisch angedeutet ist, weist in bekannter Weise die Sonaranlage 13 eine Unterwasserantenne oder Basis 14 mit einer Vielzahl von Hydrophonen 15 auf, welche die vom Ziel abgestrahlten zeitkontinuierlichen Wasserschallsignale bzw. das vom Ziel abgestrahlte Antriebsgeräusch erfassen. Die Empfangssignale werden in bekannter Weise in einem Beamformer oder Richtungsbildner 16 derart bearbeitet, daß selektive Beams oder Empfangsrichtungen entstehen, die um einen Winkel gegeneinander versetzt sind. Diese Empfangsrichtungen oder Beams haben einen von der Geometrie der Basis 14 und der Empfangsfrequenz abhängigen Öffnungswinkel $2\vartheta_{-3}$, der im Azimut wesentlich kleiner als in Elevation ist. Eine dieser Empfangsrichtungen oder Beams ist auf das Ziel Z gerichtet und wird als zielweisend bezeichnet. In dieser zielweisenden Empfangsrichtung wird das Ziel Z mit dem größten Empfangspegel empfangen. Die Verschwenkung der zielweisenden Empfangsrichtung, auch Peilbeam genannt, bezüglich eine Bezugsrichtung wird als Peilung oder Peilwinkel ausgegeben. Die zielweisende Empfangsrichtung bzw. der Peilbeam ist in Fig. 1 und 6 schematisch angedeutet und mit 17 bezeichnet.

Der Flachwasserkanal 12 besitzt Nachhalleigenschaft, d.h. durch Diskontinuitäten im Wasser, die z.B. bei Meereswasser infolge Temperatur- oder Salinitätsunterschiede, Lufteinschlüsse, Partikel-oder Mikroorganismengehalt auftreten und Impedanzsprünge bewirken, wird durch die vom Ziel Z abgestrahlten Zielgeräusche Nachhall hervorgerufen, und zwar dadurch, daß bei Auftreffen der vom Ziel Z abgestrahlten Schallenergie diese Diskontinuitäten zu Reflexionen und Streuungen Anlaß geben. Gedanklich können daher diese Diskontinuitäten als fiktive Streuzentren 18 (Fig. 1) aufgefaßt werden, die von dem bewegten Ziel Z beschallt werden. Die Schallenergie wird gestreut, so daß die über die zielweisende Empfangsrichtung 17 mit der Öffnung $2\vartheta_{-3}$ erfaßten Streuzentren 18 vom Empfänger E als fiktive Sender gesehen werden, die unterschiedliche Frequenzen, sog. Nachhallfrequenzen, abstrahlen. Die Frequenzen der einzelnen Streuzentren sind dabei von dem Winkel zwischen der Fahrtrichtung $v_S$ des Ziels Z und der Richtung, von welchen das jeweilige Streuzentrum von Ziel Z aus gesehen wird, abhängig. Ein in Fahrtrichtung des Ziels Z liegendes Streuzentrum 18 strahlt damit die größte Frequenz, ein der Fahrtrichtung entgegengesetzt liegendes Streuzentrum 18 die kleinste Frequenz ab. Allgemein werden die Streuzentren 18 von dem bewegten Ziel Z mit der Frequenz

$$f_{SCi} = f_0 (1 + \frac{v_S}{c} \cdot \cos \beta_{Vi} \cdot \cos \beta_{Hi}) \quad (1)$$

beschallt, wobei $f_0$ die Frequenz eines mit dem Zielgeräusch abgestrahlten zeitkontinuierlichen monofrequenten Signals, $v_S$ die Zielgeschwindigkeit und c die Schallgeschwindigkeit in Wasser ist. Der Winkel $\beta_{Vi}$ ist der Winkel zwischen der Richtung, in welche das jeweilige Streuzentrum von dem Ziel Z aus gesehen wird, und der von dem Geschwindigkeitsvektor des Ziels Z aufgespannten Ebene, während der Winkel $\beta_{Hi}$ der Winkel zwischen der in diese Ebene projizierten Komponente der Richtung, in welche das jeweilige Streuzentrum von dem Ziel Z aus gesehen wird, und dem Geschwindigkeitsvektor des Ziels Z ist.

Diese Nachhalleigenschaft des Flachwasserkanals 12 wird in dem Verfahren ausgenutzt, um auf passive Weise die für den Empfänger E unbekannten Zieldaten des fahrenden Ziels Z zu schätzen. Unter Zieldaten werden hier alle Informationen und Meßgrößen verstanden, die Aufschluß über Zielposition, Zielverhalten und Zieleigenschaften geben. Hierzu zählen Kurs und Geschwindigkeit $v_S$ des Ziels Z, die Entfernung R des Ziels Z zum Empfänger E, die Höhe y des Ziels Z über dem Meeresgrund 11 etc.. Bei einem dreidimensional sich bewegenden Ziel, wie dies in Fig. 1 bis 4 dargestellt ist, kann der Kurs in Elevation und Azimut angegeben werden. Die auf die Verbindungslinie von Ziel Z und Empfänger E bezogenen Kurswinkel sind mit $\alpha_H$ und $\alpha_V$ bzeichnet.

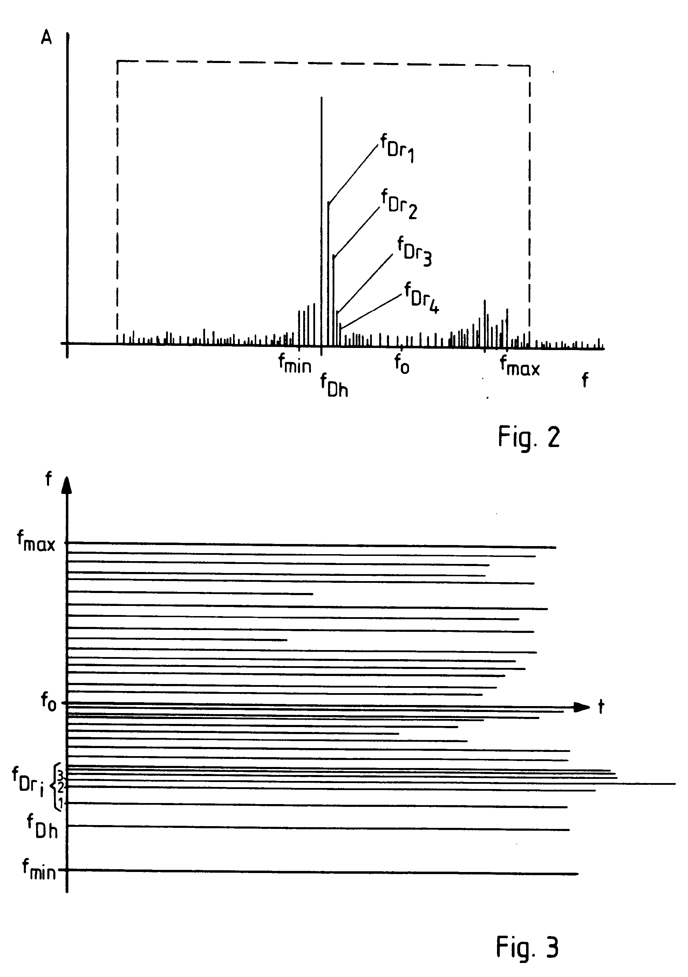

Bestände das vom Ziel Z abgestrahlte Geräusch ausschließlich aus dem monofrequenten zeitkontinuierlichen Signal mit der Frequenz $f_0$, so würde das zeitkontinuierliche Frequenzspektrum des Empfangssignals im Empfänger E wie in Fig. 3 dargestellt aussehen. In dem Spektrum werden die maximale und minimale Nachhallfrequenz $f_{max}$ bzw. $f_{min}$ und eine Vielzahl von weiteren Nachhallfrequenzen entsprechend den von den einzelnen Streuzentren gestreuten Signalen mit den Frequenzen $f_{SCi}$ gemäß Gl. (1) als Frequenzlinien auftreten. Wegen der begrenzten Lebensdauer der Streuzentren werden die in Fig. 3 über die Zeit dargestellten Frequenzlinien nicht kontinuierlich, sondern unterbrochen sein. Die Länge der Linienabschnitte ist ein Maß für die Existenzdauer der einzelnen Nachhallstreuzentren.

In dem zeitkontinuierlichen Dopplernachhallfrequenzspektrum des Empfangssignals gemäß Fig. 3 ist die Frequenzkomponente des vom Empfänger E empfangenen Direktsignals eine weitere charakteristische Frequenz. Sie zeichnet sich durch den maximalen Empfangspegel bzw. durch die maximale Empfangsamplitude aus und wird im folgenden als Hauptdopplerfrequenz $f_{Dh}$ bezeichnet. Diese Hauptdopplerfrequenz $f_{Dh}$ ist immer größer als die minimale und immer kleiner als die maximale Dopplerfrequenz $f_{min}$ bzw. $f_{max}$ und entspricht einer von beiden nur in den beiden Fällen, in denen der Geschwindigkeitsvektor des Ziels Z mit der Verbindungslinie von Ziel Z und Empfänger E fluchtet.

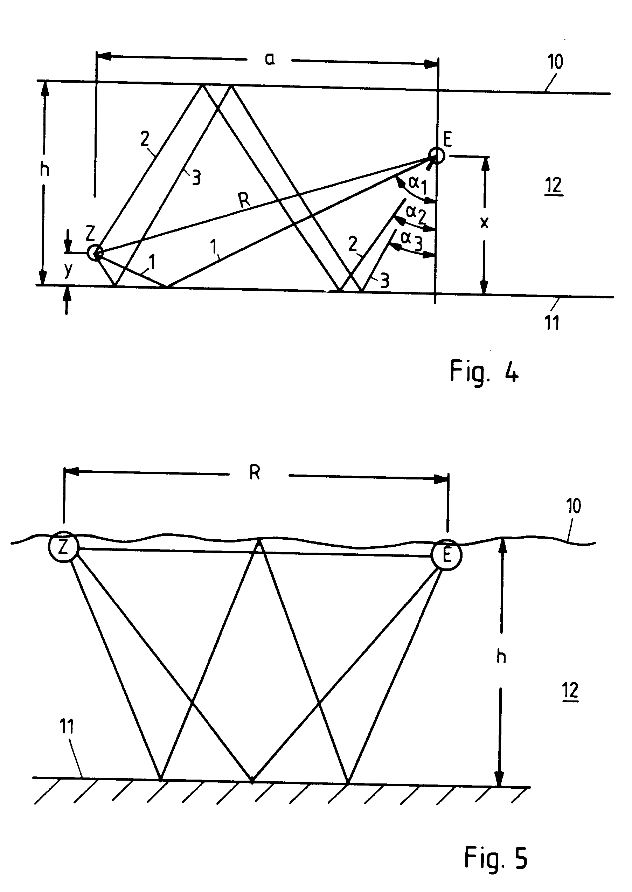

Im Flachwasserkanal 12 erreicht das zeitkontinuierliche monofrequente Direktsignal des Ziels Z den Empfänger E nicht nur auf direktem Wege, längs der Verbindungsgeraden zwischen Ziel Z und Empfänger E, sondern auch über Reflexionen an den Grenzschichten des Flachwasserkanals 12, also an dem Meeresgrund 11 und an der Wasseroberfläche 10. Dies ist in Fig. 4 schematisch illustriert. An dem ersten Reflexionspunkt des jeweiligen Schallstrahls an der Begrenzung des Flachwasserkanals 12 tritt jeweils eine Dopplerverschiebung auf. Die größte Dopplerverschiebung ist dabei in dem mit "1" gekennzeichneten Schallstrahlverlauf in Fig. 4 zu verzeichnen, die nächst größere in dem mit "2" und die drittgrößte in dem mit "3" gekennzeichneten Schallstrahlverlauf. Diese Dopplerverschiebungen sind jedoch kleiner als die Dopplerverschiebung, die die Frequenzkomponente des Direktsignals hat. Die Frequenzkomponenten des über die Wege 1, 2 und 3 an den Empfänger E gelangenden Direktsignals werden im folgenden mit Reflexionsdopplerfrequenzen $f_{Dri}$ bezeichnet, wobei i = 1, 2, 3 ... die Ordnungszahl dieser Reflexionsdopplerfrequenzen bezeichnet. Die Reflexionsdopplerfrequenz $f_{Dr1}$ erster Ordnung liegt der Hauptdopplerfrequenz $f_{Dh}$ am nächsten. Dann folgt die Reflexionsdopplerfrequenz $f_{Dr2}$ zweiter und die Reflexionsdopplerfrequenz $f_{Dr3}$ dritter Ordnung usw.. Die Amplituden dieser Frequenz sind durch die Dämpfung, die sie auf dem Ausbreitungsweg erfahren, ebenfalls kleiner als die Amplitude der Hauptdopplerfrequenz $f_{Dh}$ und nehmen mit zunehmender Ordnungzahl ab.

In Wirklichkeit besteht das zeitkontinuierliche Zielgeräusch jedoch nicht nur aus einem einzigen monofrequenten Signal, sondern aus einem Frequenzgemisch, in welchem jedoch von dem Antriebsmechanismus des Ziels erzeugte starke Wasserschallsignale kleiner Frequenzbreite enthalten sind. Nach dem hier vorgestellten Verfahren wird nunmehr von dem über dem Peilbeam bzw. aus der zielweisenden Empfangsrichtung 17 erhaltenen Empfangssignal des Empfängers E, also der Sonaranlage 13, mittels eines ersten FFT-Prozessors 19 das Frequenzspektrum gebildet. Eine schematische Darstellung des Spektrums ist in Fig. 6 innerhalb des den FFT-Prozessor 19 symbolisierenden Kastens eingezeichnet. Nunmehr wird um eine signifikante, hochfrequente Spektrallinie, im Beispiel der Fig. 6 die Spektrallinie n = 7, ein Spektralbereich begrenzter Bandbreite herausgegriffen. Dieser Spektralbereich wird symmetrisch um die hochfrequente Spektrallinie $f_n$ des Frequenzspektrums aufgespannt. Die Bandbreite wird gleich dem Vierfachen der maximal möglichen Dopplerverschiebung $\Delta f$ bemessen. Die maximal mögliche Dopplerverschiebung läßt sich aus der Wasserschallgeschwindigkeit c und der Vorgabe bekannter maximaler Zielgeschwindigkeiten $v_{max}$ gemäß

$$\Delta f = \frac{v_{max}}{c} \cdot f_n \quad (2)$$

abschätzen. Legt man bei einer mittleren Schallgeschwindigkeit von c = 1500 m/s eine maximale Geschwindigkeit des Ziels Z mit $v_{max}$ = 30 m/s (ungefähr 58 kn) zugrunde, so ergibt sich eine Bandbreite von ca. 8 % der ausgewählten Frequenz $f_n$.

Mit einem zweiten FFT-Prozessor 20 wird die Feinstruktur des Dopplernachhallfrequenzspektrums in dem aufgespannten Spektralbereich generiert. Diese Feinstruktur des Frequenzspektrums ist in Fig. 2 dargestellt. Deutlich ist ein durch die Dopplernachhallfrequenzen $f_{min}$ und $f_{max}$ begrenzter Frequenzsockel zu erkennen, aus welchem mehrere Spektrallinien herausragen. In diesem Spektralbereich begrenzter Bandbreite werden nunmehr die maximale und die minimale Dopplernachhallfrequenz $f_{max}$ bzw. $f_{min}$, die Hauptdopplerfrequenz $f_{Dh}$, die sich aufgrund ihres maximalen Pegels erkennen läßt, und die Reflexionsdopplerfrequenzen $f_{Dri}$ mit i = 1, 2, 3 ... detektiert. Die Reflexionsdopplerfrequenzen $f_{Dri}$ werden dadurch erkannt, daß sie pegel- und frequenzmäßig der Hauptdopplerfrequenz $f_{Dh}$ am nächsten liegen. Die frequenzmäßige Entfernung der einzelnen Reflexionsdopplerfrequenzen $f_{Dri}$ zu der Hauptdopplerfrequenz $f_{Dh}$ nimmt mit wachsender Ordnungszahl i zu.

Die detektierten Frequenzen $f_{Dh}$, $f_{Dri}$, $f_{max}$ und $f_{min}$ werden einem Rechner 21 zugeführt, der aus diesen Frequenzen unter Vorgabe der Schallgeschwindigkeit c in Wasser und der Höhe x des Empfängers E über dem Meeresgrund 11 die Zieldaten des Ziels Z berechnet.

Zunächst wird aus der maximalen und minimalen Dopplernachhallfrequenz $f_{max}$ und $f_{min}$ eine in dem Spektralbereich enthaltene spezifische Frequenz extrem kleiner Frequenzlinienbreite berechnet. Eine solche spezifische Frequenz ist z. B. die Schrauben-oder Propellerblattfrequenz eines schraubengetriebenen Wasserfahrzeugs. Dies kann die Grundfrequenz der Schraubenblattfrequenz sein, doch wird es in der Regel wegen der Auswahl eines hochfrequenten Spektralbereiches eine Harmonische dieser Grundfrequenz sein. Diese spezifische Frequenz, im folgenden $f_0$ bezeichnet, berechnet sich aus der halben Summe von maximaler und minimaler Dopplernachhallfrequenz gemäß

$$f_0 = \frac{1}{2} (f_{max} + f_{min}) \quad (3).$$

Aus der Hauptdopplerfrequenz $f_{Dh}$ und der so bestimmten spezifischen Zielfrequenz $f_0$ berechnet der Rechner 21 den Betrag der Zielgeschwindigkeit $v_S$ des Ziels Z gemäß

$$v_S = \frac{f_{Dh} - f_0}{f_0} \cdot c \quad (4).$$

Unter der Voraussetzung, daß die Tiefe h des Flachwasserkanals 12 bekannt ist, ermittelt der Rechner 21 aus insgesamt drei Reflexionsdopplerfrequenzen $f_{Dr1}$, $f_{Dr2}$ und $f_{Dr3}$ und den zuvor bestimmten Größen der spezifischen Zielfrequenz $f_0$ und der Zielgeschwindigkeit $v_S$ weitere Zieldaten des Ziels Z aus folgendem Gleichungssystem

$$f_{Dh} = f_0 (1 \pm \frac{v_S}{c} \cos \alpha_V \cdot \cos \alpha_H) \quad (5)$$

$$f_{Dri} = f_0 (1 \pm \frac{v_S}{c} \cos \alpha_V \cdot \cos \alpha_H \cdot \cos \alpha_i) \quad (6)$$

mit

$$\alpha_i = \text{arc ctg} \frac{h \left[ i - \left| \sin \left( \frac{3}{2} \pi \cdot i \right) \right| \right] + x + y \, (-1)^{i+1}}{a} \qquad (7)$$

und

i = 1, 2, 3.

In diesem Gleichungssystem sind insgesamt vier Unbekannte enthalten, nämlich der Elevationswinkel $\alpha_V$ zwischen dem Geschwindigkeitsvektor $v_S$ des Ziels Z und der von der Verbindungsgeraden von Ziel Z und Empfänger E aufgespannten Ebene, im folgenden vertikaler Kurswinkel genannt, der Azimutwinkel $\alpha_H$ zwischen der in die von Ziel Z und Empfänger E aufgespannten Ebene projizierten Geschwindigkeitskomponente des Geschwindigkeitsvektors $v_S$ des Ziels Z und der Verbindungslinie von Ziel Z und Empfänger E, im folgenden horizontaler Kurswinkel genannt, die Höhe y des Ziels über dem Meeresgrund 11 und der Horizontalabstand a von Ziel Z und Empfänger E. Da insgesamt vier Gleichungen mit vier unbekannten Zieldaten vorhanden sind, lassen sich die vorstehend genannten Zieldaten aus dem Gleichungssystem gemäß Gl. (5) bis (7) ermitteln.

Die Zielentfernung R wird schließlich von dem Rechner 21 gemäß Gleichung

$$R = \sqrt{(y-x)^2 + a^2} \qquad (8)$$

berechnet.

Ist die Tiefe h des Flachwasserkanals 12 nicht bekannt, so ist es erforderlich, eine weitere Reflexionsdopplerfrequenz $f_{Dr4}$ vierter Ordnung zu detektieren. Damit ergibt sich aus Gl. (6) und (7) mit i = 4 eine fünfte Gleichung, so daß wiederum ein lösbares Gleichungssystem zur Verfügung steht.

In Fig. 5 ist der allgemein gültige Fall des dreidimensional sich bewegenden Ziels Z auf ein zweidimensionales Problem zurückgeführt. Das Ziel Z und der Empfänger E befinden sich an der Wasseroberfläche 10 des Flachwasserkanals 12 mit der Tiefe h. Die Besonderheit dieser Fallgestaltung gegenüber der vorher beschriebenen, in welchem wenigstens einer von Ziel oder Empfänger getaucht ist, besteht darin, daß im Nachhallfrequenzspektrum die Reflexionsdopplerfrequenzen $f_{Dri}$ geradzahliger Ordnungszahl i nicht vorhanden sind. Die der Hauptdopplerfrequenz $f_{Dh}$ nächstliegende Reflexionsdopplerfrequenz $f_{Dri}$ ist die Reflexionsdopplerfrequenz $f_{Dr1}$ erster Ordnung und die dieser Reflexionsdopplerfrequenz frequenzmäßig nächstliegende Reflexionsdopplerfrequenz ist die Reflexionsdopplerfrequenz $f_{Dr3}$ dritter Ordnung. Dadurch, daß das Ziel Z nur eine horizontale Geschwindigkeitskomponente hat, daß die Höhe y des Ziels Z über dem Meeresgrund 11 gleich der Tiefe h des Flachwasserkanals 12 ist und daß die Entfernung R zwischen Ziel Z und Empfänger E mit dem Horizontalabstand a zwischen beiden zusammenfällt, vereinfacht sich das von dem Rechner 21 zu lösende Gleichungssystem gemäß Gl. (5) bis (7) von insgesamt vier Gleichungen auf ein Gleichungssystem von nunmehr nur noch zwei Gleichungen gemäß

$$f'_{Dh} = f_0 \left( 1 \pm \frac{v_S}{c} \cos \alpha_H \right) \qquad (9)$$

$$f'_{Dr1} = f_0 \left( 1 \pm \frac{v_S}{c} \cos \alpha_H \cdot \cos \alpha_1' \right) \qquad (10)$$

mit

$$\alpha_1 = \text{arc ctg} \frac{2h}{R} \qquad (11).$$

Zur Lösung dieses Gleichungssystems ist Voraussetzung, daß die Tiefe h des Flachwasserkanals 12 bekannt ist. Ist dies nicht der Fall, so erweitert sich das Gleichungssystem nach Gl. (9) bis (11) um eine dritte Gleichung gemäß

$$f'_{Dr3} = f_0 \left( 1 \pm \frac{v_S}{c} \cos \alpha_H \cdot \cos \alpha_3' \right) \qquad (12)$$

mit

$$\alpha_3' = \text{arc ctg} \frac{4h}{R} \qquad (13)$$

$f'_{Dr3}$ ist dabei die aus dem Frequenzspektrum ausgelesene Reflexionsdopplerfrequenz, die der Reflexionsdopplerfrequenz $f_{Dr1}$ erster Ordnung frequenzmäßig am nächsten liegt. In dem Gleichungssystem gemäß Gl. (5) bis (7) würde diese Reflexionsdopplerfrequenz der Reflexionsdopplerfrequenz $f_{Dr3}$ dritter Ordnung entsprechen.

Zur Vereinfachung ist bei dem vorstehend beschriebenen Verfahren angenommen, daß der Empfänger E am Empfangsort ruht. Bewegt sich der Empfänger E jedoch mit einer Geschwindigkeit $v_E$, so werden die vom Empfänger E erfaßten Nachhallfrequenzen der verschiedenen Streuzentren im Peilbeam oder in der zielweisen Empfangsrichtung 17 um einen weiteren Doppler, dem sog. Eigendoppler, der aus der Relativbewegung des Empfängers zu den Streuzentren resultiert, verschoben. Da jedoch der Geschwindigkeitsvektor $v_E$ des Empfängers E und die zielweisende selektive Empfangsrichtung 17 bekannt sind, läßt sich der Eigenkoppler kompensieren, so daß dann das vorstehend beschriebene Verfahren unverändert durchgeführt werden kann.

**Patentansprüche**

1. Passives Verfahren zur Schätzung von Zieldaten eines im Wasser sich bewegenden zeitkontinuierliche Wasserschallsignale, z. B. Antriebsgeräusche, abstrahlenden Ziels, insbesondere eines im Flachwasser fahrenden Schiffes, bei welchem an einem zielfernen Empfangsort die Zielsignale in mindestens einer zielweisenden selektiven Empfangsrichtung empfangen werden, dadurch gekennzeichnet, daß das Frequenzspektrum des Empfangssignals gebildet wird, daß aus dem Frequenzspektrum in einem vorzugsweise hochfrequenten Spektralbereich begrenzter Bandbreite Dopplernachhallfrequenzen ausgelesen werden, daß innerhalb des Spektralbereiches die Spektrallinie mit dem größten Empfangspegel als Hauptdopplerfrequenz ($f_{Dh}$) sowie die Spektrallinien mit größter und kleinster Frequenz als maximale und minimale Dopplernachhallfrequenzen ($f_{max}$, $f_{min}$) detektiert werden, daß eine spezifische Zielfrequenz ($f_0$) als halbe Summe der maximalen und minimalen Dopplernachhallfrequenz ($f_{max}$, $f_{min}$) Dopplernachhallfrequenz ($f_{max}$, $f_{min}$) bestimmt wird und daß aus der Hauptdopplerfrequenz ($f_{Dh}$) und der spezifischen Zielfrequenz ($f_0$) die Geschwindigkeit ($v_S$) des Ziels (Z) gemäß

$$v_S = \frac{f_{Dh} - f_0}{f_0} \cdot c$$

berechnet wird, wobei c die Schall geschwindigkeit ist.

2. Verfahren nach Anspruch 1, dadurch gekennzeichnet, daß im Frequenzbereich zwischen der Hauptdopplerfrequenz $f_{Dh}$ und der spezifischen Zielfrequenz $f_0$ mindestens drei weitere benachbarte Spektrallinien, die der Hauptdopplerfrequenz frequenzmäßig am nächsten liegen, als Reflexionsdopplerfrequenzen $f_{Dri}$ detektiert werden, wobei die Ordnungszahl (i) der jeweiligen Reflexionsdopplerfrequenz $f_{Dri}$ mit dem Frequenzabstand von der Hauptdopplerfrequenz $f_{Dh}$ zunimmt, und daß mit der spezifischen Zielfrequenz $f_0$ und der Zielgeschwindigkeit $v_S$ aus dem Gleichungssystem

$$f_{Dh} = f_0 \left(1 \pm \frac{v_S}{c} \cos \alpha_V \cdot \cos \alpha_H\right)$$

$$f_{Dri} = f_0 \left(1 \pm \frac{v_S}{c} \cos \alpha_V \cdot \cos \alpha_H \cdot \cos \alpha_i\right)$$

mit

$$\alpha_i = \text{arc ctg} \frac{h\left[i - \left|\sin\left(\frac{3}{2}\pi \cdot i\right)\right|\right] + x + y\,(-1)^{i+1}}{a}$$

und

i = 1, 2, 3

der vertikale und horizontale Kurswinkel ($\alpha_V, \alpha_H$) des Ziels (Z) bezogen auf die zielweisende Empfangsrichtung (17), die Höhe (y) des Ziels (Z) über Grund (11) und der Horizontalabstand (a) von Ziel (Z) und Empfangsort (E) berechnet werden, wobei h die bekannte Tiefe des Flachwassers (12) und x die bekannte Höhe des Empfangsortes (E) über Grund (11) ist.

3. Verfahren nach Anspruch 2, dadurch gekennzeichnet, daß bei unbekannter Tiefe (h) des Flachwassers (12) eine weitere Spektrallinie als Reflexionsdopplerfrequenz ($f_{Dr4}$) vierter Ordnung detektiert und zur Berechnung der Wassertiefe (h) das Gleichungssystem um die Gleichung

$$f_{Dr4} = f_0 \left(1 \pm \frac{v_S}{c} \cos \alpha_V \cdot \cos \alpha_H \cdot \cos \alpha_4\right)$$

mit

EP 0 253 277 B1

$$\alpha_4 = \text{arc ctg} \frac{h \left[ 4 - \left| \sin \left(\frac{3}{2}\pi \cdot 4\right)\right|\right] + x + y (-1)^{4+1}}{a}$$

erweitert wird.

4. Verfahren nach Anspruch 2 oder 3, dadurch gekennzeichnet, daß aus der bekannten Höhe x des Empfangsortes (E) über Grund (11), dem Horizontalabstand (a) zwischen Empfangsort (E) und Ziel (Z) und der Höhe (Y) des Ziels (Z) über Grund (11) die Zielentfernung (R) gemäß

$$R = \sqrt{(y - x)^2 + a^2}$$

berechnet wird.

5. Verfahren nach Anspruch 1, bei an der Wasseroberfläche befindlichen Ziel- und Empfangsort, dadurch gekennzeichnet, daß im Frequenzbereich zwischen der Hauptdopplerfrequenz ($f'_{Dh}$) und der spezifischen Zielfrequenz ($f_0$) mindestens eine weitere, der Hauptdopplerfrequenz ($f'_{Dh}$) frequenzmäßig nächstliegende Spektrallinie als Reflexionsdopplerfrequenz ($f'_{Dr1}$) detektiert wird und daß mit der spezifischen Zielfrequenz ($f_0$) und der berechneten Zielgeschwindigkeit ($v_S$) aus dem Gleichungssystem

$$f'_{Dh} = f_0 \left(1 \pm \frac{v_S}{c} \cos \alpha_H\right)$$

$$f'_{Dr1} = f_0 \left(1 \pm \frac{v_S}{c} \cos \alpha_H \cdot \cos \alpha'_1\right)$$

mit

$$\alpha'_1 = \text{arc ctg} \frac{2h}{R}$$

der Kurswinkel ($\alpha_H$) des Ziels (Z) zwischen dessen Fahrtrichtung und der zielweisenden Empfangsrichtung (17) und die Zielentfernung (R) berechnet werden, wobei (h) die bekannte Tiefe des Flachwassers (12) ist.

6. Verfahren nach Anspruch 5, dadurch gekennzeichnet, daß bei nicht bekannter Tiefe (h) des Flachwassers (12) eine weitere, der Reflexionsdopplerfrequenz ($f'_{Dr1}$) nächstliegende Dopplerfrequenz als weitere Reflexionsdopplerfrequenz ($f'_{Dr3}$) detektiert wird und zur Berechnung der Wassertiefe (h) das Gleichungssystem um die Gleichung

$$f'_{Dr3} = f_0 \left(1 \pm \frac{v_S}{c} \cos \alpha_H \cdot \cos \alpha'_3\right) \quad (12)$$

mit

$$\alpha'_3 = \text{arc ctg} \frac{4h}{R} \quad (13)$$

erweitert wird.

7. Verfahren nach einem der Ansprüche 1 bis 6, dadurch gekennzeichnet, daß der Spektralbereich symmetrisch um eine hochfrequente Spektrallinie ($f_n$) des Frequenzspektrums mit hohem Empfangspegel mit einer Bandbreite aufgespannt wird, die gleich dem Vierfachen der maximal möglichen Dopplerverschiebung ($\Delta f$) ist, die sich unter Vorgabe der Wasserschallgeschwindigkeit (c) und bekannter maximaler Zielgeschwindigkeit ($v_{max}$) gemäß

$$\Delta f = \frac{v_{max}}{c} \cdot f_n$$

abschätzen läßt.

## Claims

1. Passive method for estimating data of a target moving in water and radiating time-continuous sound signals, e.g. drive noise, from a radiating target, in particular a ship moving in shallow water, wherein the target signals are received at a target-remote receiving station in at least one selective receive direction pointing to the target, characterised in that the frequency spectrum of the received signal is formed; that Doppler reverberation time frequencies are singled out from said frequency spectrum in a band width

8

preferably restricted to a high-frequency spectral range; that within said spectral range, the spectral line with the highest receive level is detected as main Doppler frequency ($f_{Dh}$) and the spectral lines with the highest and lowest frequency are detected as maximum and minimum Doppler reverberation time frequencies ($f_{max}$, $f_{min}$); that a specific target frequency ($f_0$) is determined as half the sum of said maximum and minimum Doppler reverberation time frequencies ($f_{max}$, $f_{min}$), and that from said main Doppler frequency ($f_{Dh}$) and said specific target frequency ($f_0$), the speed ($v_S$) of the target (Z) are calculated on the basis of the following equation:

$$v_S = \frac{f_{Dh} - f_0}{f_0} \cdot c$$

wherein c is the speed of sound.

2. Method according to Claim 1, characterised in that in the frequency range between the main Doppler reverberation time frequency ($f_{Dh}$) and the specific target frequency ($f_0$), at least three further adjacent spectral lines lying closest in frequency to said main Doppler frequency are detected as Doppler reflection frequencies ($f_{Dri}$), the ordinal number (i) of the respective Doppler reflection frequency ($f_{Dri}$) thereby increasing with the frequency separation from said main Doppler frequency ($f_{Dh}$), and that the vertical and horizontal course angles ($\alpha_V$, $\alpha_H$) of the target (Z) are calculated on the basis of the receive direction (17) pointing to the target as well as the height (y) of said target (Z) above ground (11) and the horizontal distance (a) between said target (Z) and the receiving station (E), from the following system of equations with said specific target frequency ($f_0$) and target speed ($v_S$):

$$f_{Dh} = f_0 \left(1 \pm \frac{v_S}{c} \cos \alpha_V \cdot \cos \alpha_H\right)$$

$$f_{Dri} = f_0 \left(1 \pm \frac{v_S}{c} \cos \alpha_v \cdot \cos \alpha_H \cdot \cos \alpha_i\right)$$

where

$$\alpha_i = \operatorname{arc\,ctg} \frac{h\left[i - \left|\sin\left(\frac{3}{2}\pi \cdot i\right)\right|\right] + x + y\,(-1)^{i+1}}{a}$$

and
$$i = 1, 2, 3,$$

wherein h is the known depth of the shallow water (12) and x the known height of the receiving station (E) above ground (11).

3. Method according to Claim 2, characterised in that, where the depth (h) of the shallow water (12) is unknown, a further spectral line is detected as a Doppler reflection frequency ($f_{Dr4}$) of the fourth order and the system of equations is extended to the following for calculation of the water depth (h):

$$f_{Dr4} = f_0 \left(1 \pm \frac{v_S}{c} \cos \alpha_v \cdot \cos \alpha_H \cdot \cos \alpha_4\right)$$

where

$$\alpha_4 = \operatorname{arc\,ctg} \frac{h\left[4 - \left|\sin\left(\frac{3}{2}\pi \cdot 4\right)\right|\right] + x + y\,(-1)^{4+1}}{a}$$

4. Method according to Claim 2 or 3, characterised in that from the known height (x) of the receiving station (E) above ground (11), the horizontal distance (a) between receiving station (E) and target (Z) and the height (y) of said target (Z) above ground (11), the target distance (R) is calculated on the basis of

$$R = \sqrt{(y - x)^2 + a^2}.$$

5. Method according to Claim 1, with target and receiving station located on the water surface, characterised in that in the frequency range between the main Doppler frequency ($f'_{Dh}$) and the specific target frequency ($f_0$), at least one further spectral line lying closest in frequency to said main Doppler frequency ($f'_{Dh}$) is detected as Doppler reflection frequency ($f'_{Dr1}$), and that the course angle ($\alpha_H$) of said target (Z) between its direction of travel and the receiving direction (17) pointing to said target as well as the target distance (R) are calculated with said specific target frequency ($f_0$) and the calculated target speed ($v_S$) from the following system of equations:

$$f'_{Dh} = f_0 (1 \pm \frac{v_S}{c} \cos \alpha_H)$$

$$f'_{Dr1} = f_0 (1 \pm \frac{v_S}{c} \cos \alpha_H \cdot \cos \alpha'_1)$$

where

$$\alpha'_1 = \text{arc ctg} \frac{2h}{R},$$

wherein (h) is the known depth of the shallow water (12).

6. Method according to Claim 5, characterised in that, where the depth (h) of the shallow water (12) is unknown, a further Doppler frequency lying closest to Doppler reflection frequency ($f'_{Dr1}$) is detected as a further Doppler reflection frequency ($f'_{Dr3}$) and the system of equations is extended by the following equation to calculate the water depth (h):

$$f'_{Dr3} = f_0 (1 \pm \frac{v_S}{c} \cos \alpha_H \cdot \cos \alpha'_3) \quad (12)$$

where

$$\alpha'_3 = \text{arc ctg} \frac{4h}{R}. \quad (13)$$

7. Method according to one of Claims 1 to 6, characterised in that the spectral range is arranged symmetrically around a high-frequency spectral line ($f_n$) of the frequency spectrum with high receiving level having a band width equal to four-times the maximum possible Doppler shift ($\Delta f$), which may be estimated on the basis of the following equation, given the underwater sound speed (c) and the known maximum target speed ($v_{max}$):

$$\Delta f = \frac{v_{max}}{c} \cdot f_n.$$

**Revendications**

1. Procédé passif d'estimation de données d'une cible qui se déplace dans l'eau et émet des signaux acoustiques continus dans le temps, par exemple des bruits d'entraînement, notamment d'un bateau se déplaçant en eau peu profonde, selon lequel les signaux de la cible sont reçus en un lieu de réception éloigné de la cible, dans au moins une direction de réception sélective dirigée sur la cible, caractérisé en ce qu'on forme le spectre de fréquences du signal de réception, qu'à partir du spectre de fréquences on lit des fréquences de réverbération Doppler dans une plage spectrale, située de préférence dans les hautes fréquences et possédant une largeur de bande limitée, qu'à l'intérieur de la plage spectrale, on détecte la raie spectrale possédant le niveau maximum de réception en tant que fréquence Doppler principale ($f_{Dh}$) ainsi que les raies spectrales possédant la fréquence maximale et la fréquence minimale en tant que fréquences maximale et minimale de réverbération Doppler ($f_{max}$, $f_{min}$), qu'on détermine une fréquence spécifique ($f_0$) de la cible en tant que demi-somme des fréquences maximale et minimale de réverbération Doppler ($f_{max}$, $f_{min}$) et qu'à partir de la fréquence Doppler principale ($f_{Dh}$) et à partir de la fréquence spécifique ($f_0$) de la cible, on calcule la vitesse ($v_S$) de la cible (Z) conformément à

$$v_S = \frac{f_{Dh} - f_0}{f_0} \cdot c$$

c désignant la vitesse du son.

2. Procédé selon la revendication 1, caractérisé en ce que dans la gamme des fréquences situées entre la fréquence Doppler principale $f_{Dh}$ et la fréquence spécifique $f_0$ de la cible, on détecte au moins trois autres raies spectrales voisines, qui sont, du point de vue des fréquences, les plus proches de la fréquence Doppler principale, en tant que fréquences Doppler de réflexion $f_{Dri}$, le numéro d'ordre (i) de la fréquence Doppler de réflexion $f_{Dri}$ augmentant lorsque la distance par rapport à la fréquence Doppler principale $f_{Dh}$ augmente, et qu'avec la fréquence spécifique $f_0$ de la cible et la vitesse $v_S$ de la cible, on calcule, à partir du système d'équations

$$f_{Dh} = f_0 \left(1 \pm \frac{v_S}{c} \cos \alpha_V \cdot \cos\alpha_H\right)$$

$$f_{Dri} = f_0 \left(1 \pm \frac{v_S}{c} \cos\alpha_V \cdot \cos\alpha_H \cdot \cos\alpha_i\right)$$

avec

$$\alpha_i = \text{arc ctg} \ \frac{h\left[i - \left|\sin\left(\frac{3}{2}\pi.i\right)\right|\right] + x + y\,(-1)^{i+1}}{a}$$

et

i = 1, 2, 3

l'angle vertical et l'angle horizontal ($\alpha_V$, $\alpha_H$) de la trajectoire de la cible (Z) par rapport à la direction de réception (17) dirigée sur la cible, la hauteur (y) de la cible (Z) au-dessus du fond (11) et la distance horizontale (a) entre la cible (Z) et le lieu de réception (E), h désignant la profondeur connue de l'eau de faible profondeur (12) et x la hauteur connue du lieu de réception (E) au-dessus du fond (11).

3. Procédé selon la revendication 2, caractérisé en ce que, dans le cas où la profondeur (h) de l'eau peu profonde (12) est inconnue, on détecte une autre raie spectrale en tant que fréquence Doppler de réflexion ($f_{Dr4}$) du quatrième ordre et que pour le calcul de la profondeur (h) de l'eau, on accroît le système d'équations, de l'équation

$$f_{Dr4} = f_0 \left(1 \pm \frac{v_S}{c} \cos\alpha_V \cdot \cos\alpha_H \cdot \cos\alpha_4\right)$$

avec

$$\alpha_4 = \text{arc ctg} \ \frac{h\left[4 - \left|\sin\left(\frac{3}{2}\pi.4\right)\right|\right] + x + y\,(-1)^{4+1}}{a}.$$

a

4. Procédé selon la revendication 2 ou 3, caractérisé en ce qu'à partir de la hauteur connue (x) du lieu de réception (E) au-dessus du fond (11), de la distance horizontale (a) entre le lieu de réception (E) et la cible (Z) et de la hauteur (y) de la cible (Z) au-dessus du fond (11), on calcule l'éloignement (R) de la cible conformément à

$$R = \sqrt{(y - x)^2 + a^2}.$$

5. Procédé selon la revendication 1, dans le cas où la cible et le lieu de réception sont situés à la surface de l'eau, caractérisé en ce que dans la gamme des fréquences comprises entre la fréquence Doppler principale ($f'_{Dh}$) et la fréquence spécifique ($f_0$) de la cible, on détecte au moins une autre raie spectrale, qui est la plus proche, du point de vue fréquence, de la fréquence Doppler principale ($f'_{Dh}$), en tant que fréquence Doppler de réflexion ($f'_{Dr1}$), et qu'avec la fréquence spécifique ($f_0$) de la cible et la vitesse calculée ($v_S$) de la cible, on calcule, à partir du système d'équations

$$f'_{Dh} = f_0 \left(1 \pm \frac{v_S}{c} \cos\alpha_H\right)$$

$$f'_{Dr1} = f_0 \left(1 \pm \frac{v_S}{c} \cos\alpha_H \cdot \cos\alpha'_1\right)$$

avec

$$\alpha'_1 = \text{arc ctg} \ \frac{2h}{R}$$

l'angle ($\alpha_H$) de la trajectoire de la cible (Z) entre sa direction de déplacement et la direction de réception (17) dirigée vers la cible, et l'éloignement (R) de la cible, (h) désignant la hauteur connue de l'eau peu profonde (12).

6. Procédé selon la revendication 5, caractérisé en ce que dans le cas où la profondeur (h) de l'eau peu profonde (12) est inconnue, on détecte une autre fréquence Doppler, qui est la plus proche de la fréquence Doppler de la réflexion ($f'_{Dr1}$), en tant qu'autre fréquence Doppler de réflexion ($f'_{Dr3}$) et que pour le calcul de la profondeur (h) de l'eau, on augmente le système d'équations, de l'équation

$$f'_{Dr3} = f_0 \left(1 \pm \frac{v_S}{c} \cos\alpha_H \cdot \cos\alpha'_3\right) \quad (12)$$

avec

$$\alpha'_3 = \text{arc ctg} \frac{4h}{R} \quad (13).$$

7. Procédé selon l'une des revendications 1 à 6, caractérisé en ce que la gamme spectrale s'étend symétriquement de part et d'autre de la raie spectrale à haute fréquence ($f_n$) du spectre de fréquences possédant un niveau élevé de réception, avec une largeur de bande qui est égale au quadruple du décalage Doppler maximum possible ($\Delta f$), que l'on peut estimer moyennant la prédétermination de la vitesse (c) du son dans l'eau et de la vitesse maximale connue ($v_{max}$) de la cible conformément à

$$\Delta f = \frac{v_{max}}{c} \cdot f_n.$$

Fig. 1a

Fig. 1b

Fig. 2

Fig. 3

Fig. 4

Fig. 5

$$f_{Dh}, f_{Dr_i}, f_{max}, f_{min}$$

$$f_0 = \frac{1}{2}(f_{max} + f_{min})$$

$$v_s = (f_{Dn} - f_0)\, c \cdot f_0^{-1}$$

$$f_{Dh} = f_0\left(1 \pm \frac{v_s}{c} \cdot \cos\alpha_v \cdot \cos\alpha_H\right)$$

$$f_{Dr_i} = f_0\left(1 \pm \frac{v_s}{c} \cdot \cos\alpha_v \cdot \cos\alpha_H \cdot \cos\alpha_i\right)$$

$$\alpha_i = \operatorname{arc\,ctg}\frac{h}{a}\left\{i - I\sin\frac{3}{2}\pi \cdot iI\right\} + x + y\,(-1)^{i+1}$$

$$i = 1, 2, 3, (4)$$

$$R = \sqrt{(y-x)^2 + a^2}$$

Ribi (BF)

FFT — n=1 ... n=7 — $f_7$

FFT — n=7

Outputs: $f_0$  $v_s$  $\alpha_H$  $\alpha_v$  $R$  $y$  $(h)$

Inputs: $c$  $x$

Fig. 6